# EUROPEAN PATENT SPECIFICATION

(11) **EP 3 469 879 B1**
(45) Date of publication and mention of the grant of the patent: **07.10.2020**
(21) Application number: 18196713.4
(22) Date of filing: 25.09.2018
(51) Int. Cl.: A01D 43/063

(54) **GRASS-MOWER**
RASENMÄHER
TONDEUSE À GAZON

(30) Priority: 28.09.2017 JP 2017188026
(43) Date of publication of application: 17.04.2019
(73) Proprietor: Iseki & Co., Ltd., Matsuyama-shi, Ehime 799-2692 (JP)
(72) Inventor: KURITA, Kazuyuki, Tobe-cho, Iyo-gun, Ehime 791-2193 (JP)
(74) Representative: Spengler, Robert

(56) References cited:
- EP-A1- 3 025 574
- DE-U1- 20 304 243
- US-A- 4 476 668
- US-A1- 2004 088 961

## Description

### BACKGROUND OF THE INVENTION

### Field of the Invention

The present invention relates to a grass-mower for performing grass-mowing working.

### Related Art of the Invention

Known is a grass-mower comprising a collector which possesses a collector main-body which accommodates mowed grass to an inner part, a collector dump mechanism which performs a dump operation of the collector, a collector-door lock mechanism which performs a lock of a collector-door of the collector main-body, and an automatic collector-door lock releasing mechanism which automatically releases the lock of the collector-door accompanying the dump operation (for example, refer to Japanese Patent Application Publication No. 2016-119916).

Document EP 3 025 574 A1 discloses a grass-mower, comprising a collector which possesses a collector main-body which accommodates mowed grass to an inner part, and a collector-door lock mechanism which performs a lock of a collector-door of the collector main-body. The grass-mower further comprises a manual collector-door lock releasing mechanism which releases the lock of the collector-door based on a manual operation which is performed in the inner part of the collector main-body.

### SUMMARY OF THE INVENTION

However, regarding a conventional grass-mower, a worker who got into the inner part of the collector main-body, when the collector-door is closed and a lock of the collector-door has been performed, cannot easily get out to the outer part of the collector main-body.

A purpose of the present invention is, in consideration of the conventional problem described above, to furnish a grass-mower for which a worker who got into the inner part of the collector main-body, even when the collector-door is closed and a lock of the collector-door has been performed, can easily get out to the outer part of the collector main-body.

The 1^{st} aspect of the present invention is a grass-mower, comprising: a collector (700) which possesses a collector main-body (710) which accommodates mowed grass to an inner part; and a collector-door lock mechanism (1000) which performs a lock of a collector-door (711) of the collector main-body (710), characterized in that the grass-mower comprises a manual collector-door lock releasing mechanism (3000) which releases the lock of the collector-door (711) based on a manual operation which is performed in the inner part of the collector main-body (710), wherein the manual collector-door lock releasing mechanism (3000) is provided utilizing a stick-like member (3100) one end part (3101) of which is connected to the collector-door lock mechanism (1000), another end part (3102) of the stick-like member (3100) protrudes to the inner part of the collector main-body (710), and the one end part (3101) of the stick-like member (3100) acts to the collector-door lock mechanism (1000) according to the manual operation onto the another end part (3102) of the stick-like member (3100), and thereby the lock of the collector-door (711) is released.

By means of this, since comprising a manual collector-door lock releasing mechanism (3000) which releases the lock of the collector-door (711) based on a manual operation which is performed in the inner part of the collector main-body (710), a worker who got into the inner part of the collector main-body (710), even when the collector-door (711) is closed and a lock of the collector-door (711) has been performed, can easily get out to the outer part of the collector main-body (710).

Furthermore, since the manual collector-door lock releasing mechanism (3000) is provided utilizing a stick-like member (3100) one end part (3101) of which is connected to the collector-door lock mechanism (1000), the configuration of the manual collector-door lock releasing mechanism (3000) can be simplified.

The 2^{nd} aspect of the present invention is the grass-mower according to the 1^{st} aspect of the present invention, wherein the manual operation onto the manual collector-door lock releasing mechanism (3000) is an operation to push the another end part (3102) of the stick-like member (3100) towards the collector-door (711).

By means of this, even in case the grass is caught when mowed grass is dumped, automatic release of the lock accompanying the dump operation is not interrupted by the manual collector-door lock releasing mechanism (3000).

By the present invention, a grass-mower for which a worker who got into the inner part of the collector main-body, even when the collector-door is closed and a lock of the collector-door has been performed, is able to easily get out to the outer part of the collector main-body can be furnished.

### BRIEF DESCRIPTION OF THE DRAWINGS

FIG. 1 is a schematic left side view of the grass-mower of the embodiment in the present invention;
FIG. 2 is a perspective view of the grass-mower of the embodiment in the present invention;
FIG. 3 is a partial perspective view of the neighborhood of the collector ascending-and-descending link mechanism and the collector dump link mechanism of the grass-mower of the embodiment in the present invention;
FIG. 4 is a partial perspective view of the neighborhood of the collector bottom-frame of the grass-mower of the embodiment in the present invention;
FIG. 5 is a partial perspective view of the neighborhood of the support-stand of the grass-mower of the embodiment in the present invention;
FIG. 6 is a partial left side view of the neighborhood of the collector-door lock mechanism and the automatic collector-door lock releasing mechanism of the grass-mower of the embodiment in the present invention;
FIG. 7 is a partial left side view (No. 1) of the neighborhood of the collector-door lock mechanism, the automatic collector-door lock releasing mechanism and the manual collector-door lock releasing mechanism of the grass-mower of the embodiment in the present invention;
FIG. 8 is a partial left side view (No. 2) of the neighborhood of the collector-door lock mechanism, the automatic collector-door lock releasing mechanism and the manual collector-door lock releasing mechanism of the grass-mower of the embodiment in the present invention;
FIG. 9 is a schematic perspective view of the attaching plate of the grass-mower of the embodiment in the present invention;
FIG. 10 is a schematic partial perspective view of the neighborhood of the collector main-body of the grass-mower of the embodiment in the present invention;
FIG. 11 is a partial left side view of the neighborhood of the stick-like member of the grass-mower of the embodiment of a variant example (No. 1) in the present invention;
FIG. 12 is a partial left side view of the neighborhood of the stick-like member of the grass-mower of the embodiment of a variant example (No. 2) in the present invention;
FIG. 13 is a schematic partial perspective view of the neighborhood of the base member of the grass-mower of the embodiment of a variant example (No. 3) in the present invention;
FIG. 14 is a partial left side view of the neighborhood of the penetrating-hole of the grass-mower of the embodiment of a variant example (No. 4) in the present invention; and
FIG. 15 is a schematic partial top view of the neighborhood of the penetrating-hole of the grass-mower of the embodiment of a variant example (No. 4) in the present invention.

### Description of the Reference Numerals

- 11: partition member
- 12: safety-frame
- 13: bonnet
- 20: engine
- 21: PTO clutch
- 31L: left side front-wheel
- 31R: right side front-wheel
- 32L: left side rear-wheel
- 32R: right side rear-wheel
- 40: driving part
- 41: steering wheel
- 42: seat
- 43: seat belt
- 50: blower
- 51: mowed-grass conveying shoot
- 52: shooter
- 60: mower
- 61: mower deck
- 100: vehicle-body
- 110: support-stand
- 150L: left side support-stand receiving member
- 150R: right side support-stand receiving member
- 151L: receiving face
- 151R: receiving face
- 200L: left side column member
- 200R: right side column member
- 210L: left side link fulcrum member
- 210R: right side link fulcrum member
- 220L: left side ascending-and-descending cylinder fulcrum member
- 220R: right side ascending-and-descending cylinder fulcrum member
- 300: collector ascending-and-descending mechanism
- 310L: left side ascending-and-descending cylinder member
- 310R: right side ascending-and-descending cylinder member
- 400: collector ascending-and-descending link mechanism
- 410L: left side upper link arm member
- 410R: right side upper link arm member
- 420L: left side lower link arm member
- 420R: right side lower link arm member
- 421L: left side lower link arm joining member
- 421R: right side lower link arm joining member
- 430: link-frame
- 431: link-frame main-body
- 432L: left side link-frame fulcrum member
- 432R: right side link-frame fulcrum member
- 433L: left side link-frame joining member
- 433R: right side link-frame joining member
- 434L: left side dump link fulcrum member
- 434R: right side dump link fulcrum member
- 450L: left side link-frame abutting member
- 450R: right side link-frame abutting member
- 451L: abutting face
- 451R: abutting face
- 460L: left side link-frame receiving member
- 460R: right side link-frame receiving member
- 461L: receiving face
- 461R: receiving face
- 500: collector dump mechanism
- 510L: left side dump cylinder member
- 510R: right side dump cylinder member
- 511L: left side dump cylinder fulcrum pin
- 511R: right side dump cylinder fulcrum pin
- 600: collector dump link mechanism
- 610L: left side dump link arm member
- 610R: right side dump link arm member
- 611L: left side dump link arm member joining member
- 611R: right side dump link arm member joining member
- 700: collector
- 710: collector main-body
- 710a: stick-like member penetrating-hole
- 711: collector-door
- 720: collector bottom-frame
- 721L: left side collector bottom-frame joining member
- 721R: right side collector bottom-frame joining member
- 750L: left side collector bottom-frame abutting member
- 750R: right side collector bottom-frame abutting member
- 751L: abutting face
- 751R: abutting face
- 1000: collector-door lock mechanism
- 1100: lock member
- 1101: long-hole
- 1102: long-hole
- 1111: pin
- 1112: pin
- 1200: attaching plate
- 1201: round-hole
- 1202: round-hole
- 1203: rotation pin infixing-hole
- 1204: left-and-right convex part
- 1300: rotation pin
- 1400: torsion spring
- 1500: extension plate
- 1501: stick-like member infixing-hole
- 2000: automatic collector-door lock releasing mechanism
- 2100: lock releasing link plate
- 2101: slit
- 2102: round-hole
- 2200: base member
- 2201: convex part
- 2202: long-hole
- 2210: bolt
- 2220: pin
- 3000: manual collector-door lock releasing mechanism
- 3100: stick-like member
- 3101: one end part
- 3102: another end part
- 3110: attaching member
- 3200: penetrating-hole
- 3210: deformable-member

### DESCRIPTION OF THE EMBODIMENTS

In the following, referring to the drawings, descriptions are given in detail regarding embodiments in the present invention.

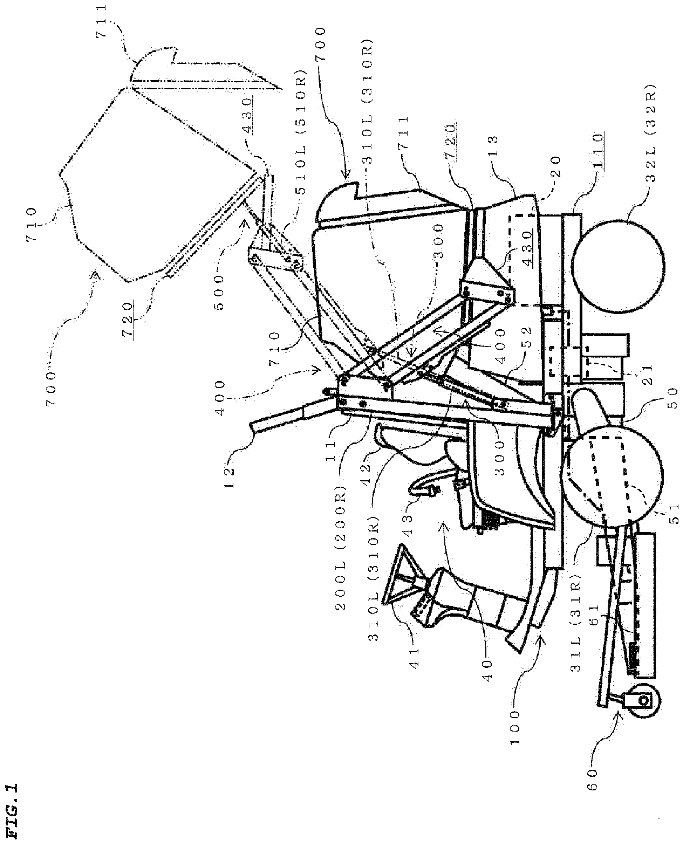

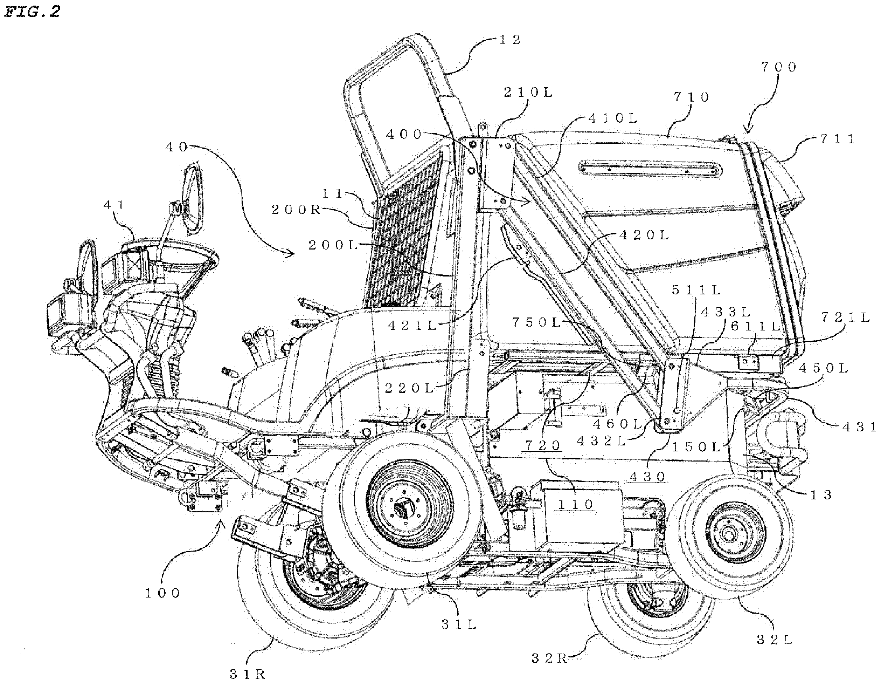

In the beginning, referring to FIGs. 1 and 2, descriptions are specifically given regarding the configuration and action of a grass-mower of the present embodiment.

Here, FIG. 1 is a schematic left side view of the grass-mower of the embodiment in the present invention, and FIG. 2 is a perspective view of the grass-mower of the embodiment in the present invention.

In FIG. 1, the state where a collector 700 is at the uppermost position in the ascending-and-descending operation and the dump operation is shown with two-dot chain lines.

Several configuration elements are sometimes not shown in the drawings and are sometimes shown with omission; the same shall apply hereinafter. For example, in FIG. 2, a mower 60 and a collector ascending-and-descending mechanism 300 are not shown, so that the configurations of a vehicle-body 100 and the like will become easier to understand.

The grass-mower of the present embodiment comprises the mower 60, a blower 50, and the collector 700. The mower 60 is a unit for mowing grass, which possesses a mower deck 61. The blower 50 is a unit for attracting the mowed grass. The collector 700 is a unit for accommodating the attracted grass.

In the front part of the vehicle-body 100 supported by a left side front-wheel 31L and a right side front-wheel 31R, and a left side rear-wheel 32L and a right side rear-wheel 32R, a driving part 40 for a worker's performing running is provided. In the driving part 40, a steering wheel 41 for a worker's performing driving is provided. In the driving part 40, a seat 42 on which a worker sits when performing driving, a seat belt 43, and the like are also provided.

The mower 60 is communicated with the blower 50 by a mowed-grass conveying shoot 51 for conveying mowed grass. The grass which is successively conveyed by the blower 50 goes through a shooter 52 and is discharged to the collector 700.

Motive force generated by an engine 20 is transmitted to the left side rear-wheel 32L and the right side rear-wheel 32R via the HST (Hydro Static Transmission) arranged at the upper side of the axle-case of the left side rear-wheel 32L and the right side rear-wheel 32R, and is also transmitted to the blower 50 via a PTO (Power Take Off) clutch 21 arranged between the engine 20 inside a bonnet 13 and the blower 50.

The collector ascending-and-descending mechanism 300 is a mechanism which performs an ascending-and-descending operation of the collector 700 which accommodates grass mowed by the mower 60 attached to the vehicle-body 100.

A collector dump mechanism 500 is a mechanism attached to a collector ascending-and-descending link mechanism 400, which performs a dump operation of the collector 700.

A partition member 11 is a member being mesh-like arranged behind the driving part 40, and a left side column member 200L and a right side column member 200R are arranged behind the partition member 11. A safety-frame 12 is a ROPS (Roll Over Protection Structure) frame in a U-shape, which connects the upper end part of the right side column member 200R and the upper end part of the right side column member 200R.

A collector main-body 710 is a resin member for accommodating mowed grass, which possesses a collector-door 711 which is opened and closed.

The grass may be a weed, may be a lawn grass, or may be a meadow grass.

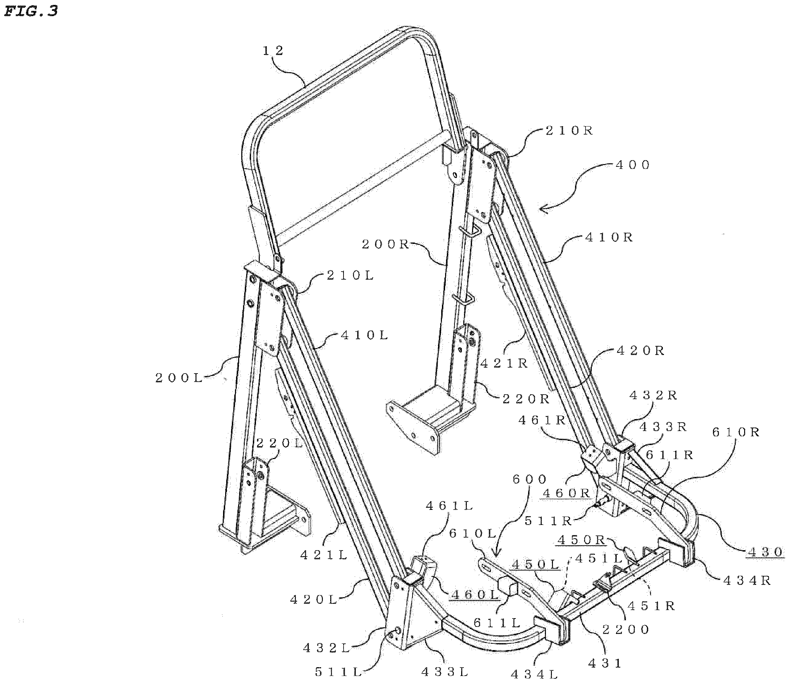

Next, mainly referring to FIGs. 3 to 5, descriptions are more specifically given regarding the configuration and action of the grass-mower of the present embodiment.

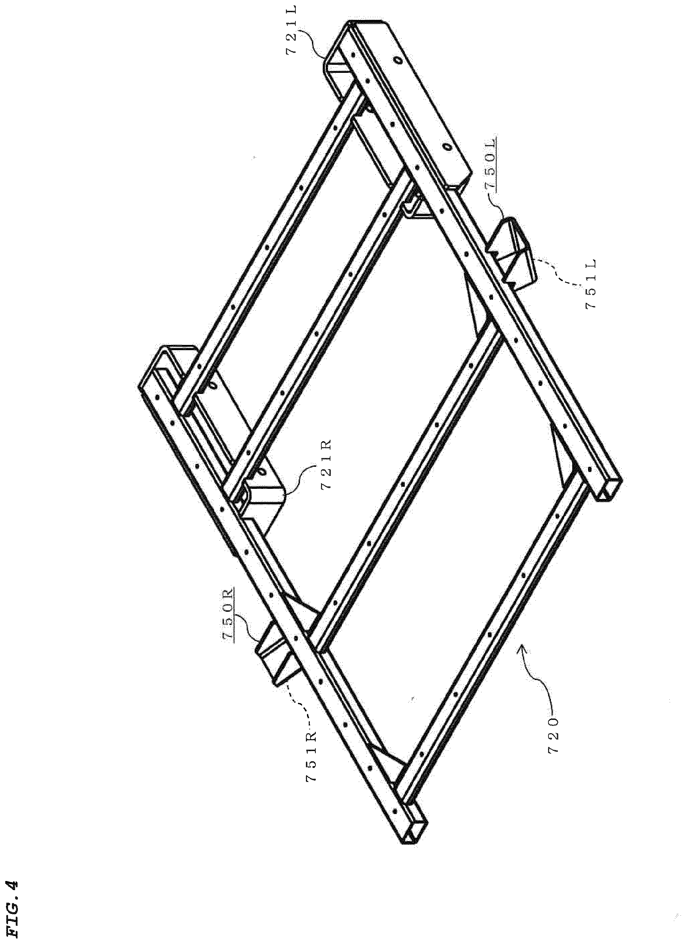

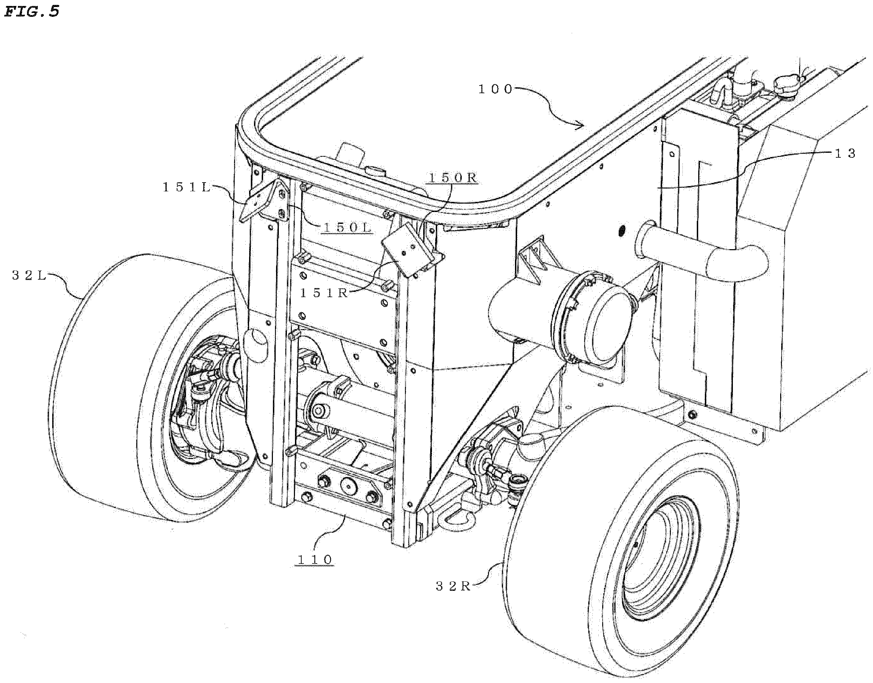

Here, FIG. 3 is a partial perspective view of the neighborhood of the collector ascending-and-descending link mechanism 400 and a collector dump link mechanism 600 of the grass-mower of the embodiment in the present invention, FIG. 4 is a partial perspective view of the neighborhood of a collector bottom-frame 720 of the grass-mower of the embodiment in the present invention, and FIG. 5 is a partial perspective view of the neighborhood of a support-stand 110 of the grass-mower of the embodiment in the present invention.

A left side link fulcrum member 210L is attached to the upper part of the left side column member 200L, and a left side ascending-and-descending cylinder fulcrum member 220L is attached to the lower part of the left side column member 200L. A left side lower link arm joining member 421L is attached to a left side lower link arm member 420L.

The front end part of a left side upper link arm member 410L is rotatably attached to the upper part of the left side link fulcrum member 210L, and the front end part of the left side lower link arm member 420L is rotatably attached to the lower part of the left side link fulcrum member 210L.

The front end part of a left side ascending-and-descending cylinder member 310L is rotatably attached to the left side ascending-and-descending cylinder fulcrum member 220L, and the rear end part of the left side ascending-and-descending cylinder member 310L is rotatably attached to the left side lower link arm joining member 421L.

A right side link fulcrum member 210R is attached to the upper part of the right side column member 200R, and a right side ascending-and-descending cylinder fulcrum member 220R is attached to the lower part of the right side column member 200R. A right side lower link arm joining member 421R is attached to a right side lower link arm member 420R.

The front end part of a right side upper link arm member 410R is rotatably attached to the upper part of the right side link fulcrum member 210R, and the front end part of the right side lower link arm member 420R is rotatably attached to the lower part of the right side link fulcrum member 210R.

The front end part of a right side ascending-and-descending cylinder member 310R is rotatably attached to the right side ascending-and-descending cylinder fulcrum member 220R, and the rear end part of the right side ascending-and-descending cylinder member 310R is rotatably attached to the right side lower link arm joining member 421R.

A left side link-frame fulcrum member 432L is attached to the left front end part of a link-frame main-body 431 via a left side link-frame joining member 433L, and a right side link-frame fulcrum member 432R is attached to the right front end part of the link-frame main-body 431 via a right side link-frame joining member 433R.

The rear end part of the left side upper link arm member 410L is rotatably attached to the upper part of the left side link-frame fulcrum member 432L, and the rear end part of the left side lower link arm member 420L is rotatably attached to the lower part of the left side link-frame fulcrum member 432L.

The rear end part of the right side upper link arm member 410R is rotatably attached to the upper part of the right side link-frame fulcrum member 432R, and the rear end part of the right side lower link arm member 420R is rotatably attached to the lower part of the right side link-frame fulcrum member 432R.

A left side dump link fulcrum member 434L is attached to the left rear part of the link-frame main-body 431, and a right side dump link fulcrum member 434R is attached to the right rear part of the link-frame main-body 431.

A left side collector bottom-frame joining member 721L is attached to the left rear part of the collector bottom-frame 720, and a right side collector bottom-frame joining member 721R is attached to the right rear part of the collector bottom-frame 720.

The front part of a left side dump link arm member 610L is attached to the left side part of the left side collector bottom-frame joining member 721L, and the rear end part of the left side dump link arm member 610L is rotatably attached to the left side dump link fulcrum member 434L.

The front part of a right side dump link arm member 610R is attached to the right side part of the right side collector bottom-frame joining member 721R, and the rear end part of the right side dump link arm member 610R is rotatably attached to the right side dump link fulcrum member 434R.

A left side dump link arm member joining member 611L is attached to the left side part of the left side dump link arm member 610L, and a right side dump link arm member joining member 611R is attached to the right side part of the right side dump link arm member 610R.

The front end part of a left side dump cylinder member 510L is rotatably attached to the right side part of the left side link-frame fulcrum member 432L, and the rear end part of the left side dump cylinder member 510L is rotatably attached to the left side dump link arm member joining member 611L.

The front end part of a right side dump cylinder member 510R is rotatably attached to the left side part of the right side link-frame fulcrum member 432R, and the rear end part of the right side dump cylinder member 510R is rotatably attached to the right side dump link arm member joining member 611R.

In a link-frame 430 of the collector ascending-and-descending link mechanism 400, a left side link-frame abutting member 450L, and a right side link-frame abutting member 450R are provided in pairs with respect to the left-and-right direction of the vehicle-body 100. In the support-stand 110 of the vehicle-body 100, a left side support-stand receiving member 150L, and a right side support-stand receiving member 150R are provided in pairs with respect to the left-and-right direction.

A receiving face 151L of the left side support-stand receiving member 150L, and a receiving face 151R of the right side support-stand receiving member 150R are inclined.

The left side link-frame abutting member 450L, and the left side support-stand receiving member 150L are arranged so that, when the collector 700 is at the lowermost position in the ascending-and-descending operation, an abutting face 451L of the left side link-frame abutting member 450L abuts against the receiving face 151L of the left side support-stand receiving member 150L. The right side link-frame abutting member 450R, and the right side support-stand receiving member 150R are arranged so that, when the collector 700 is at the lowermost position in the ascending-and-descending operation, an abutting face 451R of the right side link-frame abutting member 450R abuts against the receiving face 151R of the right side support-stand receiving member 150R.

In the collector bottom-frame 720 of the collector 700, a left side collector bottom-frame abutting member 750L, and a right side collector bottom-frame abutting member 750R are provided in pairs with respect to the left-and-right direction. In the link-frame 430 of the collector ascending-and-descending link mechanism 400, a left side link-frame receiving member 460L, and a right side link-frame receiving member 460R are provided in pairs with respect to the left-and-right direction.

A receiving face 461L of the left side link-frame receiving member 460L, and a receiving face 461R of the right side link-frame receiving member 460R are inclined.

The left side collector bottom-frame abutting member 750L, and the left side link-frame receiving member 460L are arranged so that, when the collector 700 is at the lowermost position in the dump operation, an abutting face 751L of the left side collector bottom-frame abutting member 750L abuts against the receiving face 461L of the left side link-frame receiving member 460L. The right side collector bottom-frame abutting member 750R, and the right side link-frame receiving member 460R are arranged so that, when the collector 700 is at the lowermost position in the dump operation, an abutting face 751R of the right side collector bottom-frame abutting member 750R abuts against the receiving face 461R of the right side link-frame receiving member 460R.

The section shapes of the left side link-frame fulcrum member 432L and the right side link-frame fulcrum member 432R are U-shapes, and the left side dump cylinder member 510L and the right side dump cylinder member 510R are firmly attached utilizing respectively a left side dump cylinder fulcrum pin 511L and a right side dump cylinder fulcrum pin 511R which penetrate the U-shapes with respect to the left-and-right direction.

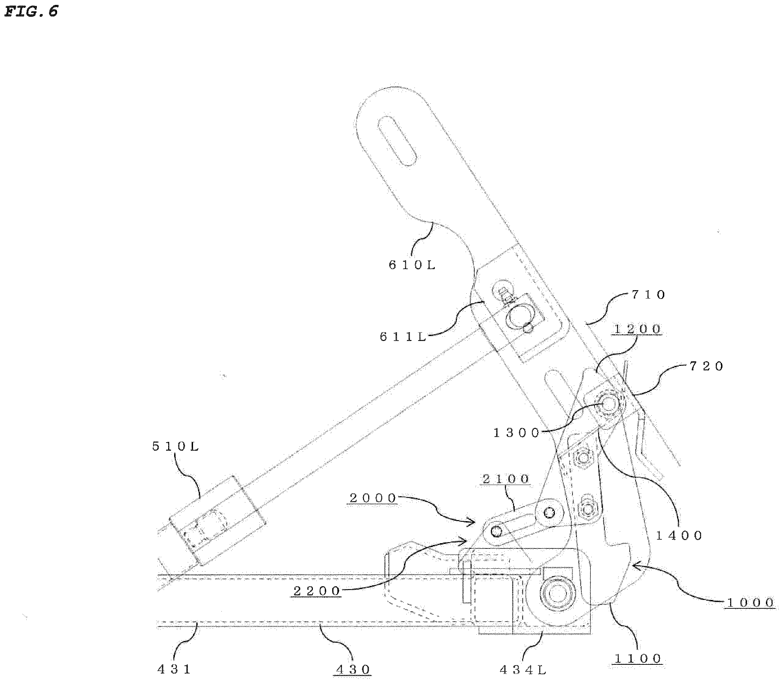

Next, mainly referring to FIGs. 6 to 8, descriptions are still more specifically given regarding the configuration and action of the grass-mower of the present embodiment.

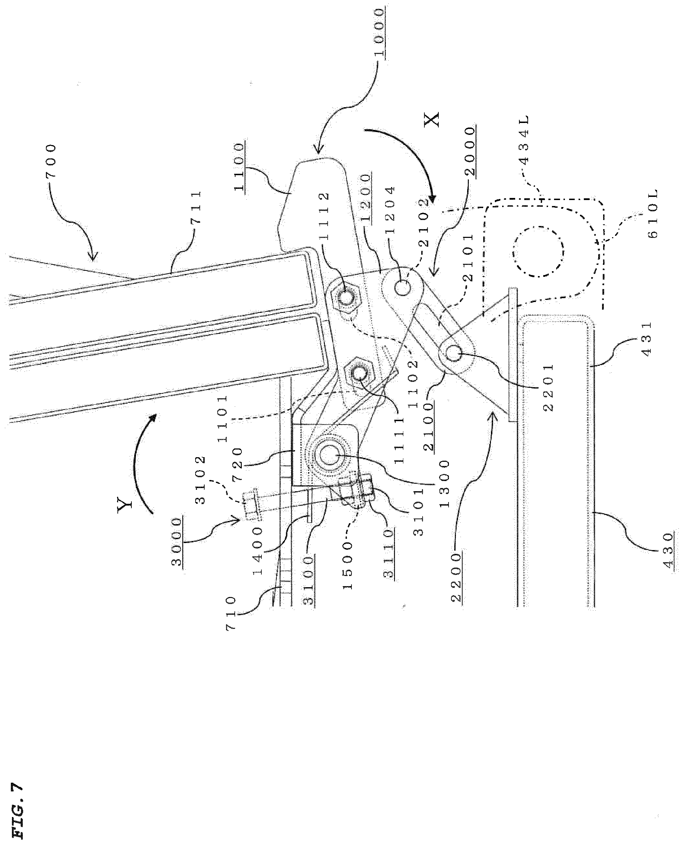

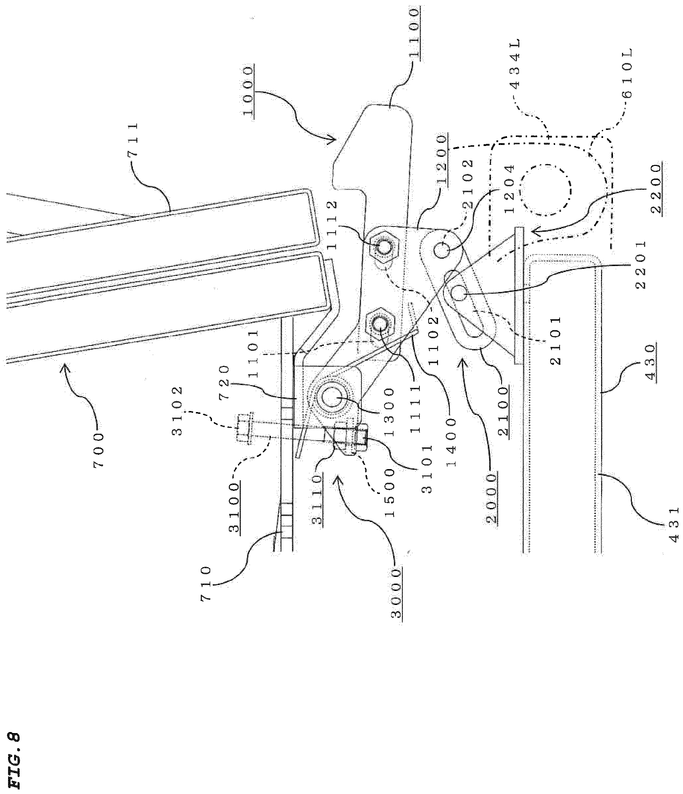

Here, FIG. 6 is a partial left side view of the neighborhood of a collector-door lock mechanism 1000 and an automatic collector-door lock releasing mechanism 2000 of the grass-mower of the embodiment in the present invention, and FIGs. 7 and 8 are partial left side views (Nos. 1 and 2) of the neighborhood of the collector-door lock mechanism 1000, the automatic collector-door lock releasing mechanism 2000 and a manual collector-door lock releasing mechanism 3000 of the grass-mower of the embodiment in the present invention.

In FIG. 6, the state where a dump operation is being performed is shown, but the manual collector-door lock releasing mechanism 3000 is not shown, so that the configurations of the collector-door lock mechanism 1000 and the automatic collector-door lock releasing mechanism 2000 will become easier to understand.

In FIG. 7, the state is shown, where a dump operation is not being performed and the lock of the collector-door 711 is not being released.

In FIG. 8, the state is shown, where a dump operation is not being performed and the lock of the collector-door 711 is being released based on a manual operation which is performed in the inner part of the collector main-body 710.

The collector dump mechanism 500 is a mechanism which performs a dump operation of the collector 700 which possesses the collector main-body 710 which accommodates mowed grass to the inner part. The collector-door lock mechanism 1000 is a mechanism which performs a lock of the collector-door 711 of the collector main-body 710. The automatic collector-door lock releasing mechanism 2000 is a mechanism which automatically releases the lock of the collector-door 711 accompanying the dump operation. The manual collector-door lock releasing mechanism 3000 is a mechanism which releases the lock of the collector-door 711 based on a manual operation which is performed in the inner part of the collector main-body 710.

Since the manual collector-door lock releasing mechanism 3000 is provided, a worker who got into the inner part of the collector main-body 710 for cleaning the grass which remains after the dump operation, even when the collector-door 711 has been closed, can easily get out to the outer part of the collector main-body 710.

Mainly referring to FIGs. 7 to 9, descriptions are more specifically given regarding the collector-door lock mechanism 1000, the automatic collector-door lock releasing mechanism 2000 and the manual collector-door lock releasing mechanism 3000.

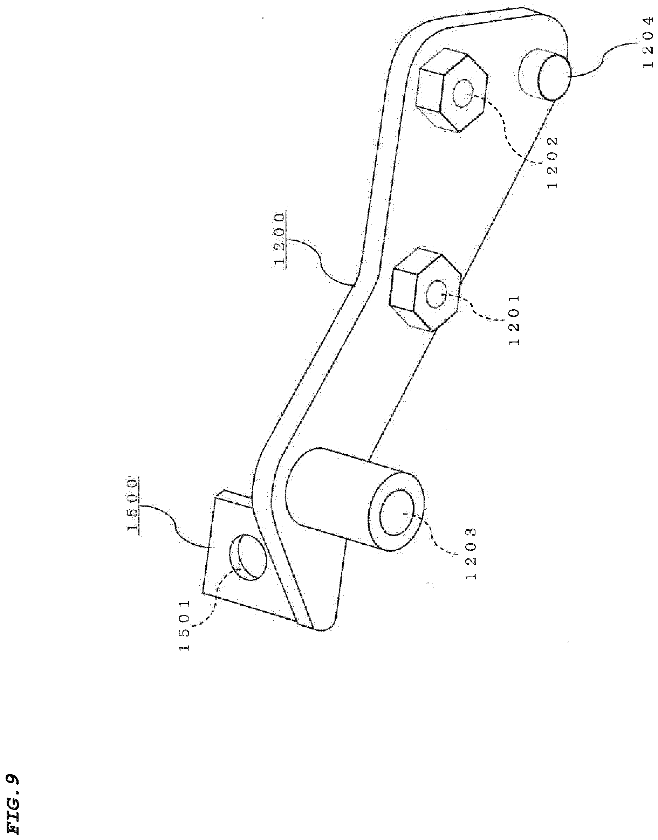

Here, FIG. 9 is a schematic perspective view of an attaching plate 1200 of the grass-mower of the embodiment in the present invention.

A lock member 1100 is fixed to the attaching plate 1200, and the rear end part of the lock member 1100 is engagable with the lower end part of the collector-door 711, so that a lock of the collector-door 711 is performed.

A pin 1111 with a head part is inserted into a round-hole 1201 and a long-hole 1101 of the lock member 1100, and the tail part of the pin 1111 is screwed with the round-hole 1201. A pin 1112 with a head part is inserted into a round-hole 1202 and a long-hole 1102 of the lock member 1100, and the tail part of the pin 1112 is screwed with the round-hole 1202.

The longitudinal direction of the long-hole 1101 and the long-hole 1102 coincides with the longitudinal direction of the lock member 1100, and the position where the lock member 1100 is fixed to the attaching plate 1200 is adjustable, in consideration of the deviation of the position where the collector main-body 710 is attached to the collector bottom-frame 720, the release timing of the lock of the collector-door 711, and the like.

The attaching plate 1200 is rotatably attached to the collector bottom-frame 720.

A rotation pin 1300 is inserted into a rotation pin infixing-hole 1203 of the attaching plate 1200.

A torsion spring 1400 is attached to the rotation pin 1300.

In the state where a dump operation of the collector 700 is not being performed, and a lock of the collector-door 711 is being performed, the rear end part of the torsion spring 1400 abuts against the attaching plate 1200, but the front end part of the torsion spring 1400 does not abut against the collector main-body 710. On the other hand, in the state where a dump operation of the collector 700 is not being performed, and the lock of the collector-door 711 is being released, not only does the rear end part of the torsion spring 1400 abut against the attaching plate 1200, but also the front end part of the torsion spring 1400 abuts against the collector main-body 710, and the torsion spring 1400 applies energizing force in the orientation for which a lock of the collector-door 711 is performed.

A base member 2200 is fixed to the link-frame main-body 431.

A lock releasing link plate 2100 connects the attaching plate 1200 with the base member 2200. A convex part 2201 of the base member 2200 is slidably infixed into a slit 2101 of the lock releasing link plate 2100, and a left-and-right convex part 1204 of the attaching plate 1200 is rotatably infixed into a round-hole 2102 of the lock releasing link plate 2100.

If a dump operation of the collector 700 is being performed, since the lock releasing link plate 2100 frontwardly pulls the attaching plate 1200, then the rear end part of the lock member 1100 comes off from the lower end part of the collector-door 711. Like this, the lock of the collector-door 711 is automatically released accompanying the dump operation.

Even in case a dump operation of the collector 700 is not being performed, if a worker in the outer part of the collector main-body 710 directly pushes the lock member 1100 down along the orientation of the arrow X, since the lock releasing link plate 2100 frontwardly slides, then the rear end part of the lock member 1100 comes off from the lower end part of the collector-door 711. Like this, the lock of the collector-door 711 is released based on a manual operation which is performed in the outer part of the collector main-body 710.

The manual collector-door lock releasing mechanism 3000 is provided utilizing a stick-like member 3100 one end part 3101 of which is connected to the collector-door lock mechanism 1000. Another end part 3102 of the stick-like member 3100 protrudes to the inner part of the collector main-body 710. The one end part 3101 of the stick-like member 3100 acts to the collector-door lock mechanism 1000 according to the manual operation onto the another end part 3102 of the stick-like member 3100, and thereby the lock of the collector-door 711 is released.

An extension plate 1500 is integrally formed with the attaching plate 1200.

The stick-like member 3100 is inserted into a stick-like member infixing-hole 1501 of the extension plate 1500.

The extension plate 1500 functions as an attaching stay of the stick-like member 3100 for releasing the lock of the collector-door 711 based on a manual operation which is performed in the inner part of the collector main-body 710.

The stick-like member 3100 is a bolt member. The one end part 3101 is a bolt tail part which possesses nut-screwing-grooves of attaching members 3110 such as an upper side nut, a lower side nut and the like. The another end part 3102 is a bolt head part for which a manual operation for making the one end part 3101 act to the collector-door lock mechanism 1000 is easy.

Even in case a dump operation of the collector 700 is not being performed, if a worker in the inner part of the collector main-body 710, by rearwardly pushing the another end part 3102 of the stick-like member 3100 along the orientation of the arrow Y, indirectly pushes the lock member 1100 down along the orientation of the arrow X, since the lock releasing link plate 2100 frontwardly slides, then the rear end part of the lock member 1100 comes off from the lower end part of the collector-door 711. Like this, the lock of the collector-door 711 is also released based on a manual operation which is performed in the inner part of the collector main-body 710.

The manual operation onto the manual collector-door lock releasing mechanism 3000 is an operation to push the another end part 3102 of the stick-like member 3100 towards the collector-door 11. Hence, since if a dump operation of the collector 700 is performed, then the another end part 3102 of the stick-like member 3100 interlocks with the automatic collector-door lock releasing mechanism 2000 and moves towards the collector-door 11, even in case the grass is caught when mowed grass is dumped, automatic release of the lock accompanying the dump operation is not interrupted by the manual collector-door lock releasing mechanism 3000.

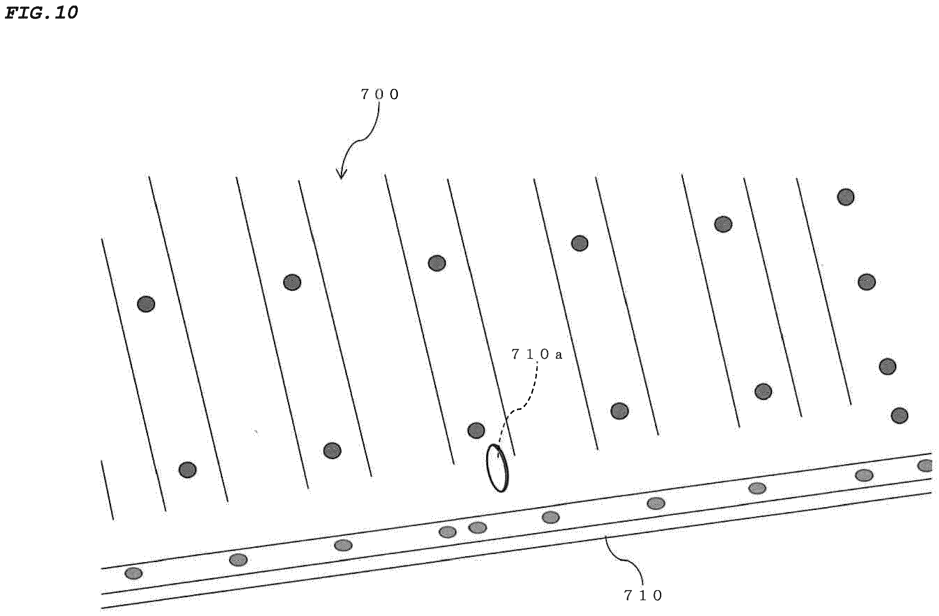

As is shown in FIG. 10 which is a schematic partial perspective view of the neighborhood of the collector main-body 710 of the grass-mower of the embodiment in the present invention, in the bottom wall of the collector main-body 710, a stick-like member penetrating-hole 710a is formed into which the stick-like member 3100 is to be inserted.

In FIG. 10, the rear edge part of the bottom wall of the collector main-body 710 is viewed from above.

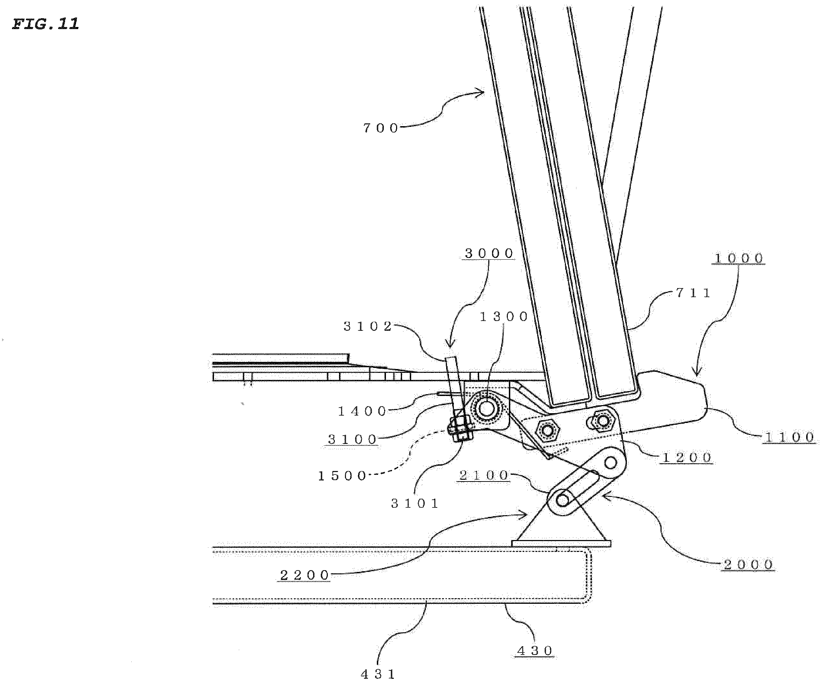

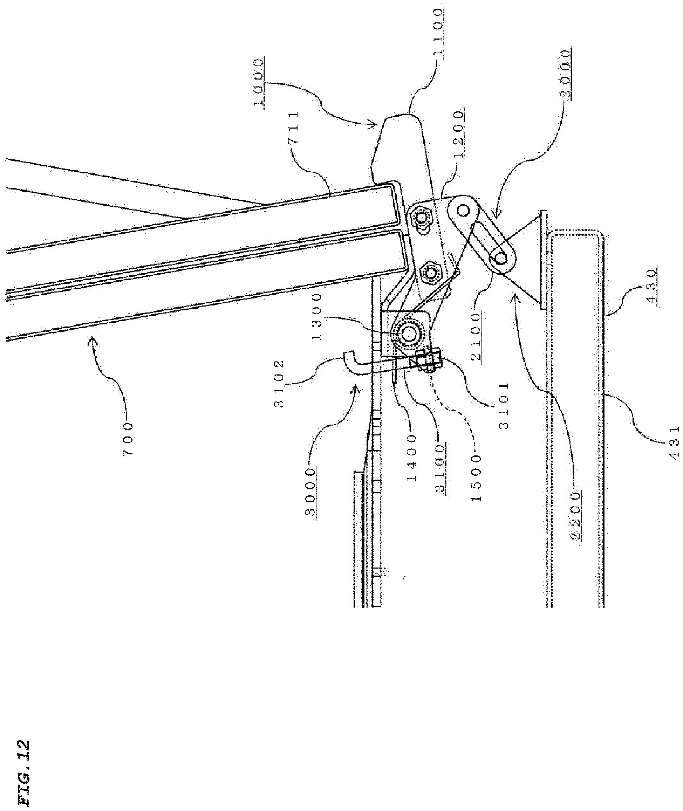

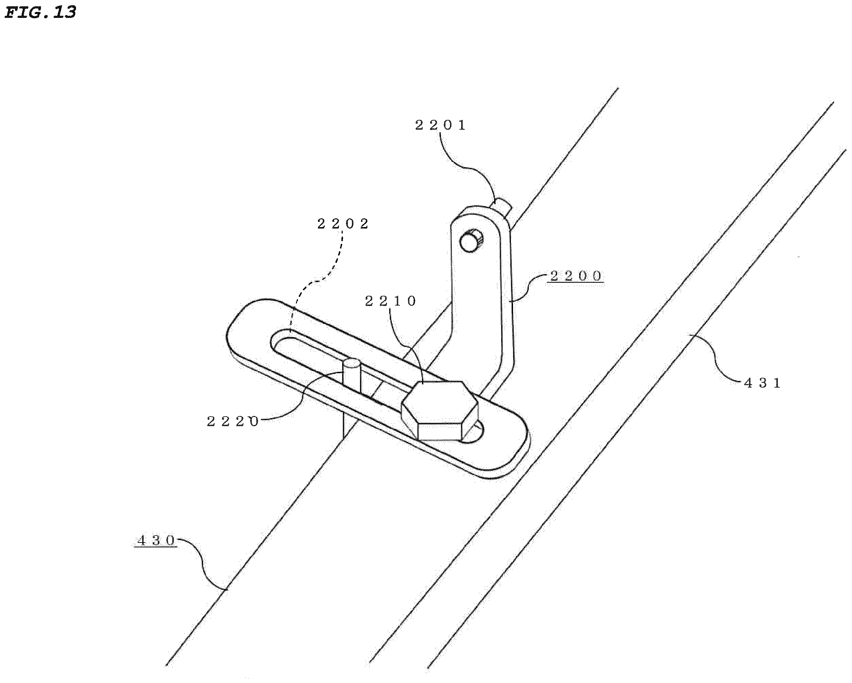

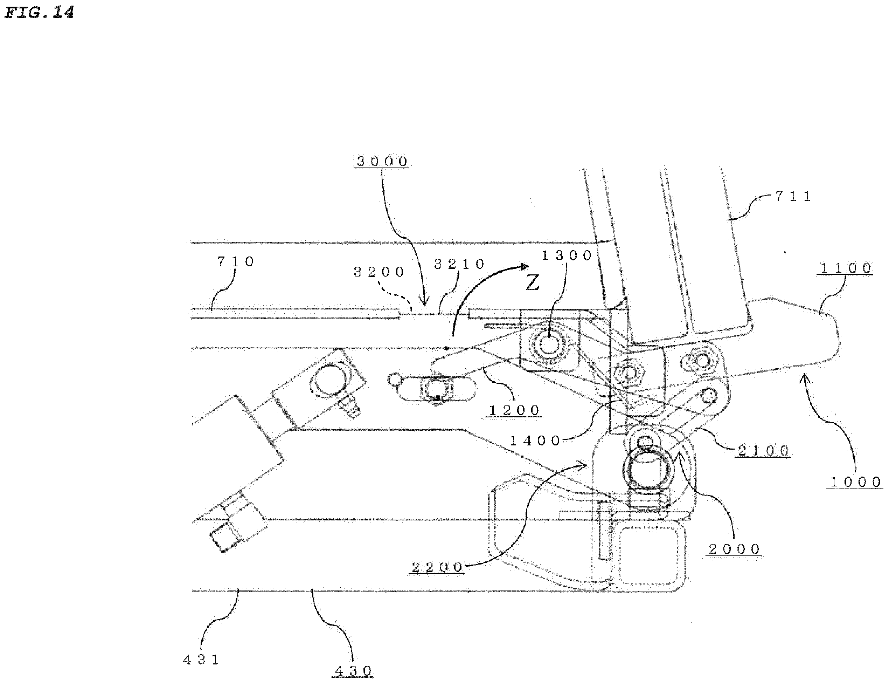

The stick-like member penetrating-hole 710a is a long-hole such that the stick-like member 3100 can easily move in the front-and-rear direction, but may be a largish round-hole.
(A) Additionally, as is shown in FIG. 11 which is a partial left side view of the neighborhood of the stick-like member 3100 of the grass-mower of the embodiment of a variant example (No. 1) in the present invention, the shape of the another end part 3102 of the stick-like member 3100 may be a column-like-shape for which grass which is accommodated to the inner part of the collector main-body 710 is less prone to be caught.
   Since the stick-like member 3100 is a round-stick for which the another end part 3102 becomes round with a chamfering process and the like, grass is less prone to be caught.
(B) Moreover, as is shown in FIG. 12 which is a partial left side view of the neighborhood of the stick-like member 3100 of the grass-mower of the embodiment of a variant example (No. 2) in the present invention, the shape of the another end part 3102 of the stick-like member 3100 may be an L-shape for which grass which is accommodated to the inner part of the collector main-body 710 is less prone to be caught, and a manual operation for making the one end part 3101 act to the collector-door lock mechanism 1000 is easy.
   Since the stick-like member 3100 is a round-stick for which the another end part 3102 is rearwardly bent, not only is a manual operation easy, but also grass is less prone to be caught.
(C) Moreover, as is shown in FIG. 13 which is a schematic partial perspective view of the neighborhood of the base member 2200 of the grass-mower of the embodiment of a variant example (No. 3) in the present invention, in the base member 2200, a long-hole 2202 may be formed.
   In FIG. 13, the square-pipe rear part of the link-frame main-body 431 is viewed from above.
   The convex part 2201 is formed in the vertical face part of the base member 2200, and the long-hole 2202 is formed in the horizontal face part of the base member 2200. A bolt 2210 is inserted into the rear end part of the long-hole 2202, and a pin 2220 is inserted into the front end part of the long-hole 2202.
   The lower end part of the bolt 2210 is screwed with a hole of the link-frame main-body 431 which possesses a bolt-screwing-groove, and the bolt 2210 functions as a single fixing member which fixes the base member 2200. The lower end part of the pin 2220, the upper end part of which protrudes from the long-hole 2202, is fixed to the link-frame main-body 431 with welding and the like, and the pin 2220 functions as a rotation-preventing member in a bar-shape which prevents base member rotation around the bolt 2210.
   The longitudinal direction of the long-hole 2202 coincides with the front-and-rear direction, and the position where the base member 2200 is fixed to the link-frame main-body 431 is adjustable, in consideration of the deviation of the position where the collector main-body 710 is attached to the collector bottom-frame 720, the release timing of the lock of the collector-door 711, and the like.
(D) Moreover, as is shown in FIG. 14 which is a partial left side view of the neighborhood of a penetrating-hole 3200 of the grass-mower of the embodiment of a variant example (No. 4) in the present invention, the manual collector-door lock releasing mechanism 3000 may be provided utilizing the penetrating-hole 3200 formed in the wall of the collector main-body 710.

A finger infixed into the penetrating-hole 3200 acts to the collector-door lock mechanism 1000 according to the manual operation, and thereby the lock of the collector-door 711 is released.

It is preferable that the attaching plate 1200 should possess a shape for which a manual operation is easy.

If a worker in the inner part of the collector main-body 710, by upwardly pulling the front end part of the attaching plate 1200 along the orientation of the arrow Z, indirectly pushes the lock member 1100 down along the orientation of the arrow X, since the lock releasing link plate 2100 frontwardly slides, then the rear end part of the lock member 1100 comes off from the lower end part of the collector-door 711. Like this, the lock of the collector-door 711 is also released based on a manual operation which is performed in the inner part of the collector main-body 710.

The penetrating-hole 3200 is shut down by a flexible deformable-member 3210.

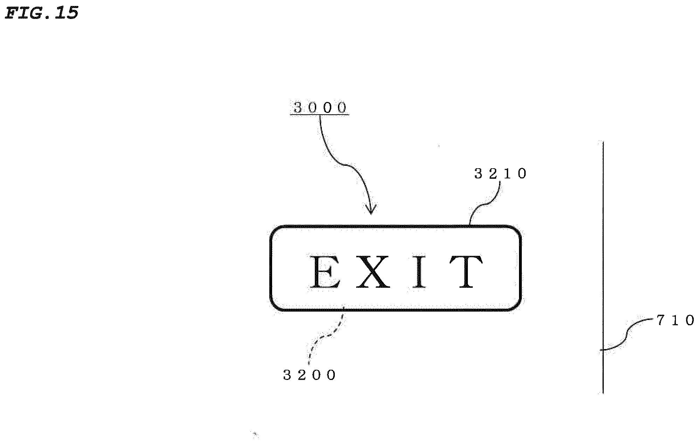

The deformable-member 3210 is, as is shown in FIG. 15 which is a schematic partial top view of the neighborhood of the penetrating-hole 3200 of the grass-mower of the embodiment of a variant example (No. 4) in the present invention, a resin sheet on the upper face of which a character-string such as "EXIT" and the like is printed, and the grass accommodated to the inner part of the collector main-body 710 does not go out to the outer part of the collector main-body 710 from the penetrating-hole 3200.

Since a finger infixed into the penetrating-hole 3200 formed in the bottom wall of the collector main-body 710, although the deformable-member 3210 intervenes between the finger and the collector-door lock mechanism 1000, directly acts to the collector-door lock mechanism 1000, the stick-like member 3100 is unnecessary.

Additionally, the penetrating-hole 3200 may be shut down, not by the deformable-member 3210, but by a rigid detachable-member. A worker in the inner part of the collector main-body 710 can easily pull the front end part of the attaching plate 1200 after detaching the detachable-member.

A grass-mower in the present invention, for which a worker who got into the inner part of the collector main-body, even when the collector-door is closed and a lock of the collector-door has been performed, can easily get out to the outer part of the collector main-body, is useful, for example, for the purpose of utilizing for a grass-mower for performing grass-mowing working.

## Claims

1. A grass-mower, comprising:
a collector (700) which possesses a collector main-body (710) which accommodates mowed grass to an inner part; and
a collector-door lock mechanism (1000) which performs a lock of a collector-door (711) of the collector main-body (710),
the grass-mower comprising a manual collector-door lock releasing mechanism (3000) which releases the lock of the collector-door (711) based on a manual operation which is performed in the inner part of the collector main-body (710), **characterized in that**
the manual collector-door lock releasing mechanism (3000) is provided utilizing a stick-like member (3100) one end part (3101) of which is connected to the collector-door lock mechanism (1000),
another end part (3102) of the stick-like member (3100) protrudes to the inner part of the collector main-body (710), and
the one end part (3101) of the stick-like member (3100) acts to the collector-door lock mechanism (1000) according to the manual operation onto the another end part (3102) of the stick-like member (3100), and thereby the lock of the collector-door (711) is released.

2. The grass-mower according to claim 1, wherein
the manual operation onto the manual collector-door lock releasing mechanism (3000) is an operation to push the another end part (3102) of the stick-like member (3100) towards the collector-door (711).

## Patentansprüche

1. Rasenmäher, der umfasst:
einen Grasfangkorb (700) mit einem Grasfangkorbhauptkörper (710), der gemähtes Gras in einem Innenteil aufnimmt; und
einen Grasfangkorbtürverriegelungsmechanismus (1000), der eine Verriegelung der Grasfangkorbtür (711) des Grasfangkorbhauptkörpers (710) durchführt,
wobei der Rasenmäher einen manuellen Grasfangkorbtürverriegelung-Freigabemechanismus (3000) umfasst, der die Verriegelung der Grasfangkorbtür (711) auf Basis einer manuellen Betätigung löst, die im Innenteil des Grasfangkorbhauptkörpers (710) erfolgt, **dadurch gekennzeichnet, dass**
der manuelle Grasfangkorbtürverriegelung-Freigabemechanismus (3000) unter Verwendung eines stabähnlichen Elements (3100) bereitgestellt wird, dessen einer Endteil (3101) mit dem Grasfangkorbtürverriegelungsmechanismus (1000) verbunden ist,
ein anderer Endteil (3102) des stabähnlichen Elements (3100) zu dem Innenteil des Grasfangkorbhauptkörpers (710) vorsteht, und
der eine Endteil (3101) des stabähnlichen Elements (3100) gemäß der manuellen Betätigung des anderen Endteils (3102) des stabähnlichen Elements (3100) auf den Grasfangkorbtürverriegelungsmechanismus (1000) einwirkt, und somit die Verriegelung der Grasfangkorbtür (711) gelöst wird.

2. Rasenmäher nach Anspruch 1, wobei
die manuelle Betätigung des manuellen Grasfangkorbtürverriegelung-Freigabemechanismus (3000) eine Betätigung ist, die den anderen Endteil (3102) des stabähnlichen Elements (3100) in Richtung der Grasfangkorbtür (711) schiebt.

## Revendications

1. Tondeuse à gazon comprenant :
un collecteur (700) qui possède un corps principal de collecteur (710) qui loge le gazon tondu dans une partie interne ; et
un mécanisme de verrouillage de porte de collecteur (1000) qui réalise un verrouillage d'une porte de collecteur (711) du corps principal de collecteur (710),
la tondeuse à gazon comprenant un mécanisme de déverrouillage de porte de collecteur manuel (3000) qui déverrouille la porte de collecteur (711) sur la base d'une opération manuelle qui est réalisée dans la partie interne du corps principal de collecteur (710), **caractérisée en ce que** :
le mécanisme de déverrouillage de porte de collecteur manuel (3000) est prévu en utilisant un élément en forme de bâton (3100), dont une partie d'extrémité (3101) est raccordée au mécanisme de verrouillage de porte de collecteur (1000),
une autre partie d'extrémité (3102) de l'élément en forme de bâton (3100) fait saillie sur la partie interne du corps principal de collecteur (710), et
la une partie d'extrémité (3101) de l'élément en forme de bâton (3100) agit sur le mécanisme de verrouillage de porte de collecteur (1000) selon l'opération manuelle sur l'autre partie d'extrémité (3102) de l'élément en forme de bâton (3100), et ainsi le verrouillage de la porte de collecteur (711) est déverrouillé.

2. Tondeuse à gazon selon la revendication 1, dans laquelle :
l'opération manuelle sur le mécanisme de déverrouillage de porte de collecteur manuel (3000) est une opération pour pousser l'autre partie d'extrémité (3102) de l'élément en forme de bâton (3100) vers la porte de collecteur (711).
